# EUROPEAN PATENT APPLICATION

(11) **EP 2 543 904 A2**
(43) Date of publication of application: **09.01.2013**
(21) Application number: 11193816.3
(22) Date of filing: 15.12.2011
(51) Int. Cl.: F16D 41/064

(54) **Clutch capable of force transmission in a selected one of two directions**

(30) Priority: 07.07.2011 TW 100124034
(71) Applicant: Elantec Industrial MFG Co., Ltd., Taichung City (TW)
(72) Inventor: Lai, Ying-Liang, Taichung City (TW)
(74) Representative: Bressel, Burkhard

(57) **Abstract**

A clutch includes a hollow base (11) having an inner annular surface (14), a drive body (20), and a plurality of clutching components (30). The drive body (20) is disposed in the hollow base (11), and includes a plurality of force-bearing surfaces (211) each cooperating with the inner annular surface (14) to define an accommodating space (26) therebetween. Each clutching component (30) is received in the accommodating space (26), and abuts against the inner annular surface (14) and the force-bearing surface (211) at first and second contact points (31, 32), respectively. An angle (θ) between a first line (L1), passing through the first contact point (31) and a center (O) of the clutching component (30), and a second line (L2), passing through the second contact point (32) and the center (O), is greater than 160° and smaller than 180°. A ratio of a maximum distance (D) between the inner annular surface (14) and the force-bearing surface (211) to a cross-sectional dimension of the clutching component (30) is greater than 1 and smaller than 1.1.

## Description

The present invention relates to a clutch, more particularly to a clutch capable of force transmission in a selected one of two directions.

A clutch is commonly used in a rear wheel hub of a bicycle, a hand tool, etc.. In particular, the hand tool, such as a ratchet wrench, is provided with a clutch capable of force transmission in a selected one of two directions. For example, each of Taiwanese Patent NOs. M395549, M399781 and 1340066 discloses a ratchet wrench with a conventional clutch. The conventional clutch includes a ratchet with a plurality of ratchet teeth, and at least one pawl. By virtue of the ratchet and the pawl, when the ratchet wrench is rotated in a forward direction, the pawl engages the ratchet teeth of the ratchet so that force is transmitted through the conventional clutch for tightening or loosening a nut or a screw. When the ratchet wrench is rotated in a backward direction opposite to the forward direction, the pawl easily slips over the ratchet teeth of the ratchet so that the conventional clutch idles and force is not transmitted to the nut/screw.

However, when the ratchet wheel has a relatively small number of the ratchet teeth, a user needs to rotate the ratchet wrench at a relatively greater angle to make the pawl engage the ratchet teeth. As a result, the user operates the ratchet wrench to tighten or loosen the nut/screw at a relatively slower speed, and a relatively larger space is required to operate the ratchet wrench. On the other hand, when the ratchet wheel has a relatively greater number of the ratchet teeth, the ratchet teeth are relatively smaller and thus, engagement force between the pawl and the ratchet teeth may be insufficient so that the ratchet teeth may break under a torsion overload. In addition, when the conventional clutch idles in the backward direction, there is a ticking noise attributed to the pawl slipping over the ratchet teeth.

Accordingly, Taiwanese Patent NOs. M246111 and M243302 disclose another type of a ratchet wrench provided with a conventional toothless clutch. The conventional toothless clutch includes a hollow base having an inner annular surface that defines a cavity, and a drive body disposed in the cavity and having a plurality of force-bearing surfaces. Each of the force-bearing surfaces cooperates with the inner annular surface to define an accommodating space therebetween for receiving a circular cylindrical column. However, engagement force between the circular cylindrical column and the drivebodymaybe insufficient, since an angle between a first line, which passes through a center of the circular cylindrical column and a tangent point between the inner annular surface and a periphery of the circular cylindrical column, and a second line, which passes through the center and a tangent point between the force-bearing surface and the periphery of the circular cylindrical column, is relatively small. As a result, the conventional toothless clutch may not engage tightly, and force cannot be transmitted completely through the conventional toothless clutch to the nut/screw. Further, since a ratio of a maximum distance between the inner annular surface and the force-bearing surfaces to a diameter of the circular cylindrical column is relatively large, a user of the ratchet wrench provided with the conventional toothless clutch takes a relatively long time to tighten or loosen the nut/screw and a relatively larger space is required to operate the ratchet wrench.

Therefore, an object of the present invention is to provide a clutch that can engage tightly and that can be operated efficiently in a relatively small space.

Accordingly, a clutch of the present invention includes a hollow base, a drive body, a plurality of clutching components, and a positioning unit.

The hollow base includes an inner annular surface surrounding a rotary axis and defining a cavity. The drive body is movably disposed in the cavity, and includes a plurality of force-bearing surfaces each of which faces and is spaced apart from the inner annular surface of the hollow base so as to cooperate with the inner annular surface to define an accommodating space therebetween. The accommodating space has a first end part, a second end part angularly spaced apart from the first end part with respect to the rotary axis, and a middle part between the first and second end parts. A distance between the inner annular surface and each of the force-bearing surfaces decreases gradually from the middle part to each of the first and second end parts.

Each of the clutching components is received in the accommodating space defined by the inner annular surface of the hollow base and a corresponding one of the force-bearing surfaces of the drive body, and abuts against the inner annular surface at a first contact point and abuts against the corresponding one of the force-bearing surfaces at a second contact point. The drive body is rotatable in the cavity about the rotary axis to dispose the clutching components at a selected one of a first position, where each of the clutching components is disposed between the first end part and the middle part in the accommodating space, and a second position, where each of the clutching components is disposed between the second end part and the middle part in the accommodating space. The positioning unit is configured for positioning the clutching components at the selected one of the first and second positions.

For each of the clutching components, an angle between a first line, that passes through the first contact point and that is perpendicular to a line tangent to the inner annular surface at the first contact point, and a second line, that passes through the second contact point and that extends along a direction a force transmitted through the clutching component is applied to the corresponding one of the force-bearing surfaces, is greater than 160° and smaller than 180°.

Each of the clutching components has a cross-sectional dimension extending from the second contact point along the direction the force transmitted through the clutching component is applied to the corresponding one of the force-bearing surfaces. A ratio of the distance between the inner annular surface and each of the force-bearing surfaces at the middle part to the cross-sectional dimension of each of the clutching components is greater than 1 and smaller than 1.1.

Other features and advantages of the present invention will become apparent in the following detailed description of the preferred embodiment with reference to the accompanying drawings, of which:
Figure 1 is an exploded perspective view of a preferred embodiment of a clutch of this invention that is capable of force transmission in a selected one of two directions;
Figure 2 is a cross-sectional view of the clutch of the preferred embodiment in which clutching components of the clutch are disposed at a first position;
Figure 3 is a cross-sectional view of the clutch illustrated in Figure 2, taken along section lines III--III;
Figure 4 is a cross-sectional view of the clutch illustrated in Figure 2, taken along section lines IV-IV;
Figure 5 is an enlarged view of a part of the clutch illustrated in Figure 2; and
Figure 6 is a cross-sectional view of the clutch of the preferred embodiment in which the clutching components are disposed at a second position.

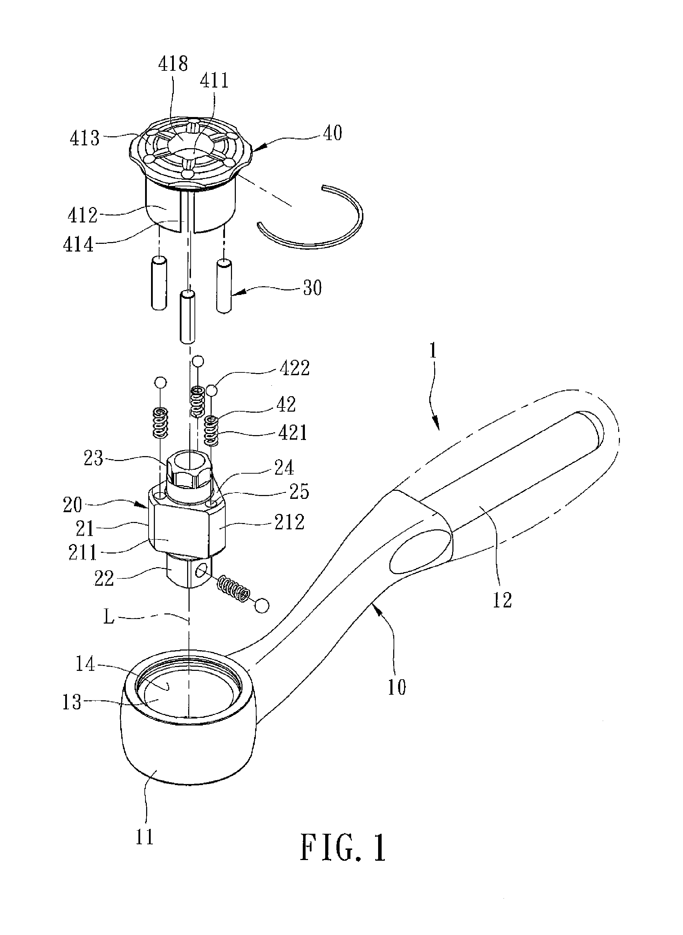

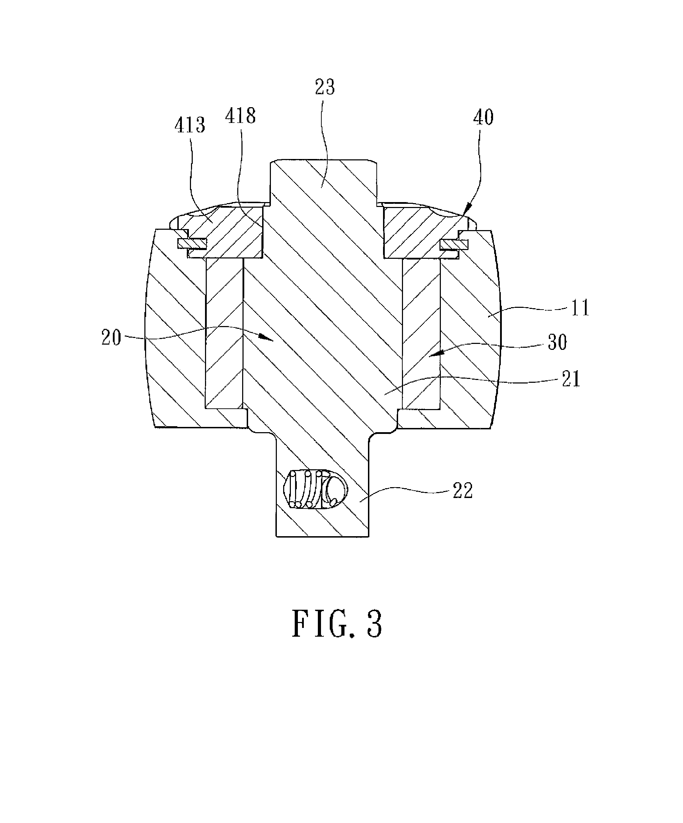

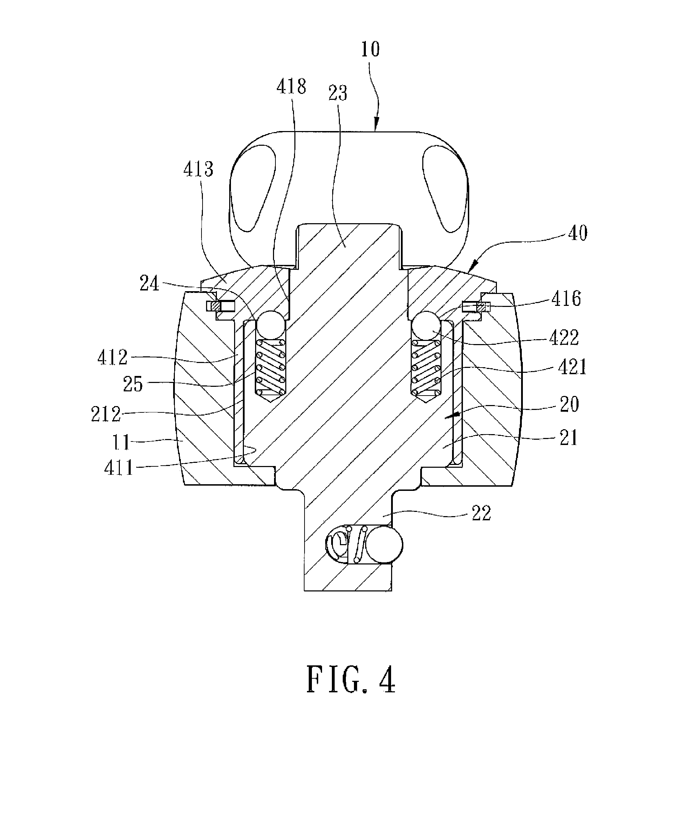

Referring to Figures 1 to 4, a preferred embodiment of a clutch according to the present invention is shown to be built into a ratchet wrench 1 having a handle 10, and includes a hollowbase 11, a drive body 20, a plurality of clutching components 30, and a positioning unit 40.

The hollow base 11 is connected to the handle 10 of the ratchet wrench 1, and includes an inner annular surface 14 surrounding a rotary axis (L) and defining a cavity 13. The drive body 20 is movably disposed in the cavity 13, and includes a middle section 21 formed with an end surface 24, an extension post 23 extending from the end surface 24 of the middle section 21 along the rotary axis (L), and a drive head 22 extending from the middle section 21 opposite to the extension post 23. The end surface 24 of the middle section 21 is formed with a plurality of receiving holes 25 angularly spaced apart from each other with respect to the rotary axis (L). The middle section 21 of the drive body 20 is further formed with a plurality of force-bearing surfaces 211, and a plurality of curved guide surfaces 212. Each of the curved guide surfaces 212 is disposed between a respective pair of the force-bearing surfaces 211, and is in slidable contact with the inner annular surface 14 of the hollow base 11.

In this embodiment, each of the force-bearing surfaces 211 is a planar surface, and a number of the force-bearing surfaces 211 is three. An angle between normal lines of any adjacent two of the force-bearing surfaces 211 is 120°. A number of the receiving holes 25 on the end surface 24 is three, and the receiving holes 25 are angularly spaced apart from each other at 120° with respect to the rotary axis (L). Also, a number of the curved guide surfaces 212 is three. The drive head 22 is in a shape of a quadrangular prism.

Each of the force-bearing surfaces 211 of the drive body 20 faces and is spaced apart from the inner annular surface 14 of the hollow base 11 so as to cooperate with the inner annular surface 14 to define an accommodating space 26 therebetween. The accommodating space 26 has a first end part 262, a second end part 263 angularly spaced apart from the first end part 262 with respect to the rotary axis (L), and a middle part 261 between the first and second end parts 262, 263. A maximum distance (D) between the inner annular surface 14 and each of the force-bearing surfaces 211 is located at the middle part 262, and the distance between the inner annular surface 14 and each of the force-bearing surfaces 211 decreases gradually from the middle part 261 to each of the first and second end parts 262 and 263. The first end part 262 and the second end part 263 of the accommodating space 26 are symmetrical in shape. The middle parts 261 of any adjacent two of the accommodating spaces 26 are angularly spaced apart from each other with respect to the rotary axis (L) at an angle of 120°.

Each of the clutching components 30 is in a shape of a circular cylindrical column, and is received in the accommodating space 26 defined by the inner annular surface 14 of the hollow base 11 and a corresponding one of the force-bearing surfaces 211 of the drive body 20. Each of the clutching components 30 abuts against the inner annular surface 14 at a first contact point 31, and abuts against the corresponding one of the force-bearing surfaces 211 at a second contact point 32.

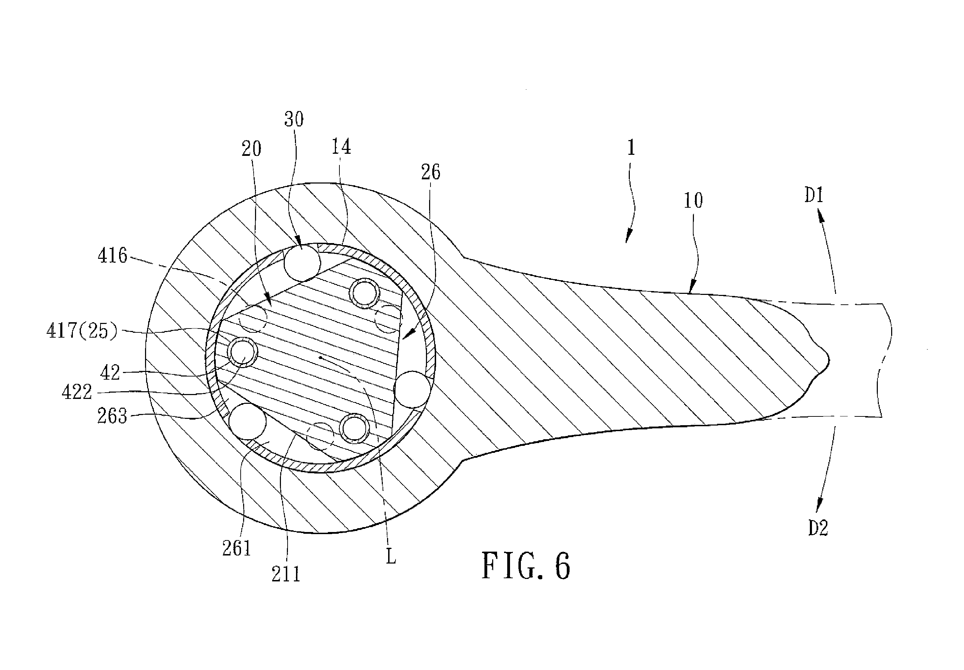

The drive body 20 is rotatable in the cavity 13 about the rotary axis (L) to dispose the clutching components 30 at a selected one of a first position, where each of the clutching components 30 is disposed between the first end part 262 and the middle part 261 in the accommodating space 26, and a secondposition (see Figure 6), where each of the clutching components 30 is disposed between the second end part 263 and the middle part 261 in the accommodating space 26. The positioning unit 40 is configured for positioning the clutching components 30 at the selected one of the first and second positions, and includes a plurality of retaining components 42, a surrounding wall 412, and a positioning plate 413 connected to the surrounding wall 412. The surrounding wall 412 and the positioning plate 413 are immovably positioned with respect to the drive body 20 by virtue of the retaining components 42.

The surrounding wall 412 is disposed in the cavity 13, surrounds the rotary axis (L), defines a receiving space 411 receiving the middle section 21 of the drive body 20, and is formed with a plurality of slots 414 in spatial communication with the receiving space 411. The clutching components 30 extend through the slots 414, respectively. The positioning plate 413 is disposed to correspond to the end surface 24 of the middle section 21 of the drive body 20, and is formed with three positioning recess sets 415 corresponding respectively to the receiving holes 25 in the end surface 24. Each of the positioning recess sets 415 includes a first positioning recess 416 and a second positioning recess 417. The positioning plate 413 is further formed with an axial through hole 418 registered with the rotary axis (L), and the extension post 23 extends from the end surface 24 along the rotary axis (L) through the axial through hole 418 in the positioning plate 413.

Each of the retaining components 42 includes a first portion 421 received in a corresponding one of the receiving holes 25, and an opposite second portion 422 exposed from the corresponding one of the receiving holes 25. In this embodiment, the first portion 421 of each of the retaining components 42 is a spring, and the second portion 422 of each of the retaining components 42 is a ball urged by the spring 421 to releasably engage one of the first and second positioning recesses 416, 417 of a corresponding one of the positioning recess sets 415. The second portion 422 of each of the retaining components 42 releasably engages the first positioning recess 416 of the corresponding one of the positioning recess sets 415 when the clutching components 30 are at the first position, and releasably engages the second positioning recess 417 of the corresponding one of the positioning recess sets 415 when the clutching components 30 are at the second position.

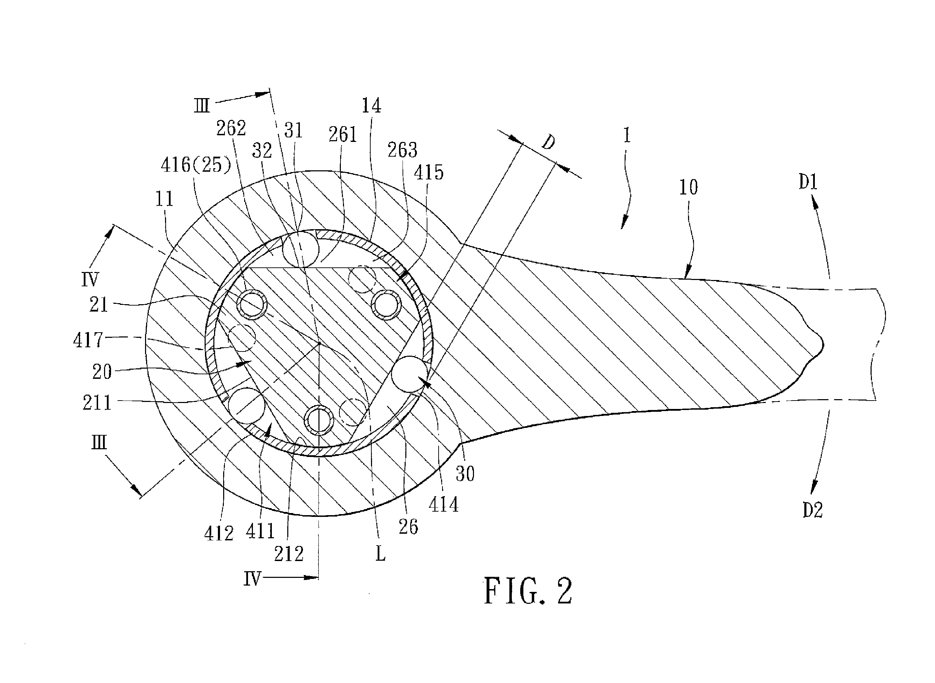

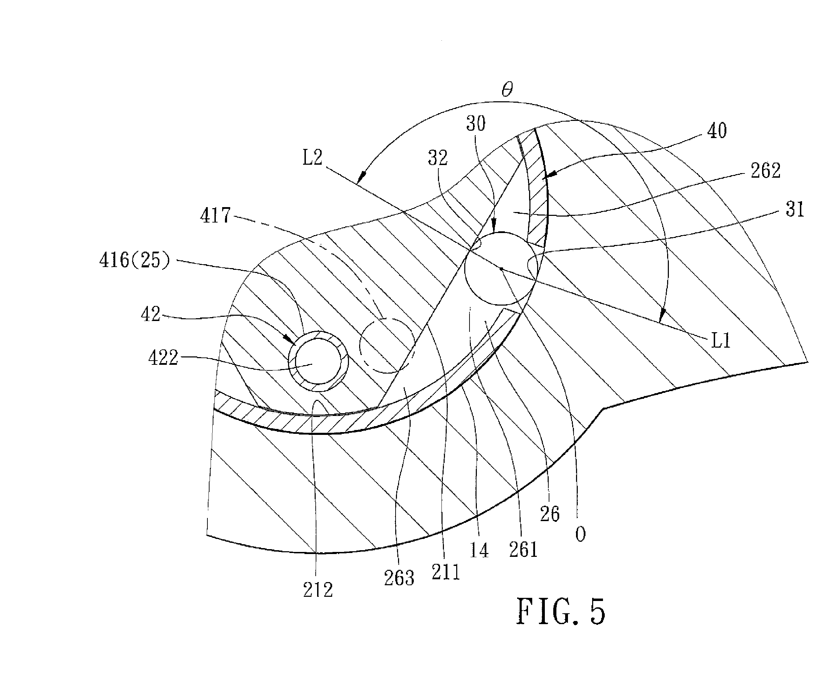

Referring to Figures 2 and 5, for each of the clutching components 30, an angle (*θ*) between a first line (L1), that passes through the first contact point 31 and a center (O) of the circular cylindrical column, and a second line (L2), that passes through the second contact point 32 and the center (O), is greater than 160° and smaller than 180°. In particular, the first line (L1) is perpendicular to a line tangent to the inner annular surface 14 at the first contact point 31, and the second line (L2) extends along a direction a force transmitted through the clutching component 30 is applied to the corresponding one of the force-bearing surfaces 211. In this embodiment, the angle (*θ*) between the first line (L1) and the second line (L2) is about 169°.

Further, each of the clutching components 30 has a cross-sectional dimension extending from the second contact point 32 along the direction the force transmitted through the clutching component 30 is applied to the corresponding one of the force-bearing surfaces 211, i.e., a diameter of the circular cylindrical column. A ratio of the maximum distance (D) between the inner annular surface 14 and each of the force-bearing surfaces 211 at the middle part 261 to the cross-sectional dimension (i.e., the diameter) of each of the clutching components 30 is greater than 1 and smaller than 1.1. In this embodiment, the ratio of the maximum distance (D) at the middle part 261 to the cross-sectional dimension of each of the clutching components 30 is 1.04.

Referring to Figures 2 to 5, the second portion 422 of each of the retaining components 42 (i.e., the ball) is urged by the first portion 421 (i.e., the spring) to releasably engage the first positioning recess 416 of a corresponding one of the positioning recess sets 415. As a result, each of the clutching components 30 is securely disposed at the first position in the accommodating space 26 between the inner annular surface 14 and the corresponding one of the force-bearing surfaces 211. At this time, when the handle 10 of the ratchet wrench 1 is rotated in a counterclockwise direction (D1) with respect to the rotary axis (L), the inner annular surface 14 engages and pushes the clutching components 30 that subsequently engage and push the force-bearing surfaces 211, respectively. Thus, the drive body 20 co-rotates with the handle 10 of the ratchet wrench 1 such that force is transmitted from the handle 10 through the clutch to a nut or a screw (not shown) that engages the drive head 22. On the other hand, when the handle 10 of the ratchet wrench 1 is rotated in a clockwise direction (D2) with respect to the rotary axis (L), the inner annular surface 14 slips over the clutching components 30 and the clutch idles so that force is not transmitted to the nut/screw.

When it is desired to change the position of the clutching components 30 from the first position to the second position, the positioning plate 413 is pressed and is immovably positioned with respect to the hollow base 11. Then, the extension post 23 of the drive body 20 is rotated in the clockwise direction (D2) so that the drive body 20 moves the second portion 422 of each of the retaining components 42 to align with the second positioning recess 417 of a corresponding one of the positioning recess sets 415. After the positioning plate 413 is released, the second portion 422 of each of the retaining components 42 engages the second positioning recess 417 of the corresponding one of the positioning recess sets 415.

Referring to Figure 6, each of the clutching components 30 is securely disposed at the second position in the accommodating space 26 between the inner annular surface 14 and the corresponding one of the force-bearing surfaces 211. When the handle 10 of the ratchet wrench 1 is rotated in the clockwise direction (D2) with respect to the rotary axis (L), the handle 10 of the ratchet wrench 1 drives the drive body 20 to co-rotate therewith such that force is transmitted from the handle 10 through the clutch to the nut/screw (not shown). When the handle 10 of the ratchet wrench 1 is rotated in the counterclockwise direction (D1) with respect to the rotary axis (L), the inner annular surface 14 slips over the clutching components 30 and the clutch idles so that force is not transmitted to the nut/screw.

In summary, since the angle (*θ*) between the first line (L1) and the second line (L2) is relatively large, engagement force between the clutching components 30 and the inner annular surface 14 and between the clutching components 30 and the force-bearing surfaces 211 is relatively large. Accordingly, the engagement between the clutching components 30 and the hollow base 11 and between the clutching components 30 and the drive body 20 is relatively secure. Further, since the ratio of the maximum distance (D) at the middle part 261 to the cross-sectional dimension (i.e., the diameter) of each of the clutching components 30 is 1.04, the ratchet wrench 1 provided with the clutch according to this invention can be operated efficiently in a relatively small space. In addition, since the curved guide surfaces 212 are in slidable contact with the inner annular surface 14 of the hollow base 11, the drive body 20 is positioned with respect to the hollow base 11.

## Claims

1. A clutch including:
a hollow base (11) including an inner annular surface (14) that surrounds a rotary axis (L) and that defines a cavity (13);
a drive body (20) movably disposed in said cavity (13), said drive body (20) including a plurality of force-bearing surfaces (211) each of which faces and is spaced apart from said inner annular surface (14) of said hollow base (11) so as to cooperate with said inner annular surface (14) to define an accommodating space (26) therebetween, said accommodating space (26) having a first end part (262), a second end part (263) angularly spaced apart from said first end part (262) with respect to the rotary axis (L), and a middle part (261) between said first and second endparts (262, 263), a distance between said inner annular surface (14) and each of said force-bearing surfaces (211) decreasing gradually from said middle part (261) to each of said first and second end parts (262, 263);
apluralityof clutching components (30) each of which is received in said accommodating space (26) defined by said inner annular surface (14) of said hollow base (11) and a corresponding one of said force-bearing surfaces (211) of said drive body (20), each of said clutching components (30) abutting against said inner annular surface (14) at a first contact point (31) and abutting against said corresponding one of said force-bearing surfaces (211) at a second contact point (32);
said drive body (20) being rotatable in said cavity (13) about the rotary axis (L) to dispose said clutching components (30) at a selected one of a first position, where each of said clutching components (30) is disposed between said first end part (262) and said middle part (261) in said accommodating space (26), and a second position, where each of said clutching components (30) is disposed between said second end part (263) and said middle part (261) in said accommodating space (26) ; and
a positioning unit (40) for positioning said clutching components (30) at the selected one of the first and second positions;
**characterized in that**, for each of said clutching components (30), an angle (*θ*) between a first line (L1), that passes through said first contact point (31) and that is perpendicular to a line tangent to said inner annular surface (14) at said first contact point (31), and a second line (L2), that passes through said second contact point (32) and that extends along a direction a force transmitted through said clutching component (30) is applied to said corresponding one of said force-bearing surfaces (211), is greater than 160° and smaller than 180°;
**characterized in that** each of said clutching components (30) has a cross-sectional dimension extending from said second contact point (32) along the direction the force transmitted through said clutching component (30) is applied to said corresponding one of said force-bearing surfaces (211), and a ratio of the distance (D) between said inner annular surface (14) and each of said force-bearing surfaces (211) at said middle part (261) to said cross-sectional dimension of each of said clutching components (30) is greater than 1 and smaller than 1.1.

2. The clutch as claimed in Claim 1, **characterized in that** a number of said force-bearing surfaces (211) of said drive body (20) is three, and said middle parts (261) of any adjacent two of said accommodating spaces (26) are angularly spaced apart from each other with respect to the rotary axis (L) at an angle of 120°.

3. The clutch as claimed in any one of Claims 1 and 2, **characterized in that** said drive body (20) further includes a plurality of curved guide surfaces (212), each of said curved guide surfaces (212) being disposed between a respective pair of said force-bearing surfaces (211) and being in slidable contact with said inner annular surface (14) of said hollow base (11).

4. The clutch as claimed in any one of Claims 1 and 2, **characterized in that** said drive body (20) further includes an end surface (24) formed with a plurality of receiving holes (25) angularly spaced apart from each other with respect to the rotary axis (L), and said positioning unit (40) includes:
a plurality of retaining components (42), each including a first portion (421) received in a corresponding one of said receiving holes (25) and an opposite second portion (422) exposed from said corresponding one of said receiving holes (25);
a surrounding wall (412) disposed in said cavity (13), surrounding the rotary axis (L), defining a receiving space (411) receiving said drive body (20), and formed with a plurality of slots (414) in spatial communication with said receiving space (411), said clutching components (30) extending through said slots (414), respectively; and
a positioning plate (413) connected to said surrounding wall (412), disposed to correspond to said end surface (24) of said drive body (20), and formed with a plurality of positioning recess sets (415) corresponding respectively to said receiving holes (25), each of said positioning recess sets (415) including a first positioning recess (416) and a second positioning recess (417);
said second portion (422) of each of said retaining components (42) releasably engaging said first positioning recess (416) of a corresponding one of said positioning recess sets (415) when said clutching components (30) are at the first position, and releasably engaging said second positioning recess (417) of said corresponding one of said positioning recess sets (415) when said clutching components (30) are at the second position.

5. The clutch as claimed in Claim 4, **characterized in that** said first portion (421) of each of said retaining components (42) is a spring, and said second portion (422) of each of said retaining components (42) is a ball urged by said spring to releasably engage one of said first and second positioning recesses (416, 417) of said corresponding one of said positioning recess sets (415).

6. The clutch as claimed in any one of Claims 4 and 5, **characterized in that** said drive body (20) further includes a plurality of curved guide surfaces (212), each of said curved guide surfaces (212) being disposed between a respective pair of said force-bearing surfaces (211) and being in slidable contact with said inner annular surface (14) of said hollow base (11).

7. The clutch as claimed in Claim 6, **characterized in that** said positioning plate (413) of said positioning unit (40) is further formed with an axial through hole (418) registered with the rotary axis (L), and said drive body (20) further includes:
a middle section (21) received in said receiving space (411) in said surrounding wall (412) and formed with said end surface (24), said force-bearing surfaces (211) and said curved guide surfaces (212);
anextensionpost (23) extendingfromsaidendsurface (24) of said middle section (21) along the rotary axis (L) through said axial through hole (418) in said positioning plate (413); and
a drive head (22) extending from said middle section (21) opposite to said extension post (23).

8. The clutch as claimed in any one of Claims 1 to 7, **characterized in that** each of said clutching components (30) is in a shape of a circular cylindrical column with a diameter serving as said cross-sectional dimension.

9. The clutch as claimed in any one of Claims 1 to 8, **characterized in that** said first end part (262) and said second end part (263) of said accommodating space (26) are symmetrical in shape.
